# EUROPEAN PATENT APPLICATION

(11) **EP 4 424 152 A1**
(43) Date of publication of application: **04.09.2024**
(21) Application number: 23159506.7
(22) Date of filing: 01.03.2023
(51) Int. Cl.: A01K 63/04, B01F 21/00

(54) **FISH FARM OXYGEN SUPPLY SYSTEM**

(71) Applicant: Bürkert Werke GmbH & Co. KG, 74653 Ingelfingen (DE)
(72) Inventor: Madsen, Ole, 74653 Indelfingen (DE); KjØngerskov, Anders, 74653 Ingelfingen (DE)
(74) Representative: Prinz & Partner mbB

(57) **Abstract**

A fish farm oxygen supply system (10) has at least one oxygen supply line (18), each oxygen supply line (18) comprising a main supply line (20) and a bypass line (22) bypassing the main supply line (20), a first flow control device (24) being arranged in the main supply line (20) and a second flow control device (26) being arranged in the bypass line (22). The first flow control device (24) is an electrically or electronically driven device and the second flow control device is a purely mechanical device.

## Description

The invention relates to a fish farm oxygen supply system for supplying oxygen to animals in tanks.

In fish farms, the fish tanks need to be supplied continuously with oxygen. Fish farms are highly automated plants where food and oxygen supply for the animals is as far as possible remotely controlled. Therefore, the oxygen supply is usually controlled by an electrically driven flow control device that can be set and monitored remotely.

It is an object of the invention to provide a system for supplying fish farms with oxygen which is highly reliable and is easy to maintain.

This object is achieved by a fish farm oxygen supply system with at least one oxygen supply line, each oxygen supply line comprising a main supply line and a bypass line bypassing the main supply line, a first flow control device being arranged in the main supply line and a second flow control device being arranged in the bypass line, the first flow control device being an electrically or electronically driven device and the second flow control device being a purely mechanical device.

The bypass line and the second flow control device supply the necessary oxygen to the fish tanks with a desired flow rate in case of an emergency where electrical current drops out, as the purely mechanical second flow control device is not dependent of an electrical power supply. Therefore, a reliable oxygen supply for the animals is insured.

Generally, the standard operation is an automated, remotely controlled operation where exclusively the first flow control device in the main supply line is used to regulate the oxygen supply, while the bypass line is not used for oxygen supply. Only in an emergency or in case of maintenance on the main supply line, oxygen supply is switched to the bypass line and the second flow control device.

Preferably, both the main supply line with the first flow control device and the bypass line with the second flow control device are designed to each provide the complete oxygen supply for the connected animal tank. Therefore, if one of the flow control devices should fail, the other can take over the operation, and the system is highly redundant.

The oxygen supply system is preferably positioned between an oxygen supply, e.g. an oxygen reservoir bottle, and a connecting line leading to the respective animal tank. The complete oxygen supply system usually is arranged in a central control cabinet, into which the supply line from the oxygen reservoir leads and from which the connecting line or lines extend to the animal tanks.

Although the invention as described here with regard to fish and fish tanks, it is applicable to all kinds of animal farming where the animals have to be constantly provided with oxygen.

Preferably, a first switching valve and a second switching valve for switching an oxygen flow between the main supply line and the bypass line are provided.

The switching valves may be configured for manual or for electrical operation. Manually operated switching valves have the advantage that they operate independently of the electrical power supply.

In a preferred option, the switching valves are 3/3-way valves.

Advantageously, the switching valves are adapted to provide three flow paths in total, so that oxygen flows either through the main supply line or through the bypass line or through neither. If oxygen flows through the main supply line, the bypass line should be closed completely and vice versa.

The first flow control device is for instance a mass flow controller (MFC) or an electrically driven proportional valve, in particular a solenoid valve. Flow control devices of these kinds may easily be operated fully automated.

Preferably, a controller is provided that is electronically connected to the first flow control device and adapted to control the first flow control device, in particular to set the oxygen flow rate through the main supply line. The controller may, for instance, be connected to the first flow control device by a bus system. It preferably fully automatically regulates the set point for the oxygen flow rate based on data from an external control system, in particular from a remote site.

The second flow control device is preferably a manually adjustable variable-area flow meter, in particular with an integrated needle valve, e.g. a regulator with a rotameter.

In a first variant, the switching valves are arranged upstream and downstream of both the first and the second flow control device. This variant is suited in particular when the first flow control device is a mass flow controller or another device that needs regular maintenance.

In a second variant, both switching valves are positioned in series upstream of the second flow control device and parallel to the first flow control device. In this variant, the second flow control device may serve additionally as a mechanical display for the current oxygen through flow.

The oxygen supply system may comprise several oxygen supply lines that are arranged in parallel, each supply line having a first flow control device arranged in their respective main supply line and a second flow control device arranged in their respective bypass line. A single oxygen supply system may supply all tanks of the fish farm with oxygen.

Preferably, all first flow control devices are connected to the controller as described above.

To allow for a modular assembly of the oxygen supply system, mounting blocks may be provided that are adjacently fixed to a carrier plate, the mounting blocks having flow channel sections, the flow channel sections of adjacent mounting blocks being fluidly connected to each other to form a flow channel. The mounting blocks form a kind of building kit, with a multitude of mounting blocks with differently shaped flow channel sections. Mounting blocks with suitably shaped flow channel sections are combinable to form the entire flow channel that serves as the main supply line or as the bypass line.

Tube shaped connectors may be placed between adjacent mounting blocks to form a sealed connection between their flow channel sections.

Preferably, the carrier plate comprises a preformed grid of threaded holes that corresponds to mounting openings in the individual mounting blocks. Each mounting block may be attached to the carrier plate, either directly or by way of another mounting block, e.g. by a screw connection.

When at least the first and second flow control devices are non-destructively detachable connected to an associated mounting block, maintenance on the fish farm oxygen supply system can be fast and cost efficient.

Preferably, mounting blocks are provided that have fluid ports on a front face opposite to a rear face that is connected to the carrier plate, to which components, e.g. the first flow control device or a switching valve can be mounted. This allows attaching the respective component from the easily accessible front side of the oxygen supply system. In particular, all first flow control devices may be mounted to their associated mounting blocks at and to a front face of the mounting block. This also results in a very compact system, and the number of fittings and pipelines may be reduced.

To remove a component, only its connection to the mounting block or the carrier plate, respectively, has to be released and the component removed in the direction perpendicular to the carrier plate. The serviced component or a new component is than set on the mounting block so that fluid ports of the component align with fluid ports in the front surface of the mounting block, and the connection to the mounting block or the carrier plate is closed again. Only the respective component needs to be handled, making replacement and servicing fast.

Also, as the fluid ports are moved relative to each other along the extension direction of the adjacent flow channel sections, a seal between the fluid ports is not deformed sideways and the sealing effect is improved.

Due to the redundancy of the system, the flow control devices, in particular the first flow control devices in the main supply line may be replaced during ongoing operation, while the second flow control device in the bypass line supplies oxygen with the desired flow rate to the respective tank.

The mounting blocks preferably remain fixed to the carrier plate when the components are removed or replaced.

The first flow control device may be mounted on a bridge block distanced from the carrier plate and mechanically and fluidically connected to a front face of an upper end mounting block and a lower end mounting block at two opposite longitudinal ends of the bridge block. This way, a distance of the first flow control device with regard to the carrier plate maybe adjusted without using additional mounting blocks.

The bridge block may be composed of several mounting blocks that are connected to each other, but not directly to the carrier plate.

An oxygen distribution with a central supply line connecting all oxygen supply lines of the fish farm oxygen supply system to the oxygen reservoir is also configurable using mounting blocks, as described above.

The complete fish farm oxygen supply system as described above may be preconfigured and tested at a remote factory and then shipped to the fish farm already assembled and mounted in a control cabinet. The oxygen supply system only needs to be connected to the oxygen reservoir and the connecting lines to the animal tanks as well as to a remote control system.

The invention provides a system for a redundant oxygen supply for any suitable type of fish or aquatic animal farm. One main supply line is realized with electrical, and preferably digital, control technology, and, additional, in parallel a purely mechanical bypass line is provided, which can be switched to in an emergency. The system may easily be designed modular, making it easily scalable.

The invention is described in more detail below with regard to preferred embodiments and with reference to the accompanying figures.
- Figure 1 shows schematic view of a fish farm oxygen supply system according to the invention;
- Figure 2 shows a schematic view of an oxygen supply line of the fish farm oxygen supply system of Figure 1 in two different variants;
- Figure 3 shows the fish farm oxygen supply system of Figure 1 in three different possible oxygen flow paths;
- Figure 4 shows the oxygen supply lines of Figure 2 in a schematic perspective view;
- Figure 5 shows a fish farm oxygen supply system according to Figure 1 with four oxygen supply lines;
- Figure 6 shows a schematic view of an oxygen supply line of the fish farm oxygen supply system of Figure 2;
- Figure 7 shows a section of the oxygen supply line of Figure 6 along the line VII -VII;
- Figure 8 shows a section of the oxygen supply line of Figure 6 along the line VIII -VIII;
- Figure 9 shows a section of the oxygen supply line of Figure 6 along the line IX -IX; and
- Figure 10 shows a section of the fish farm oxygen supply system of Figure 6 along the line X -X.

For reasons of clarity, identical components are not always provided with reference signs.

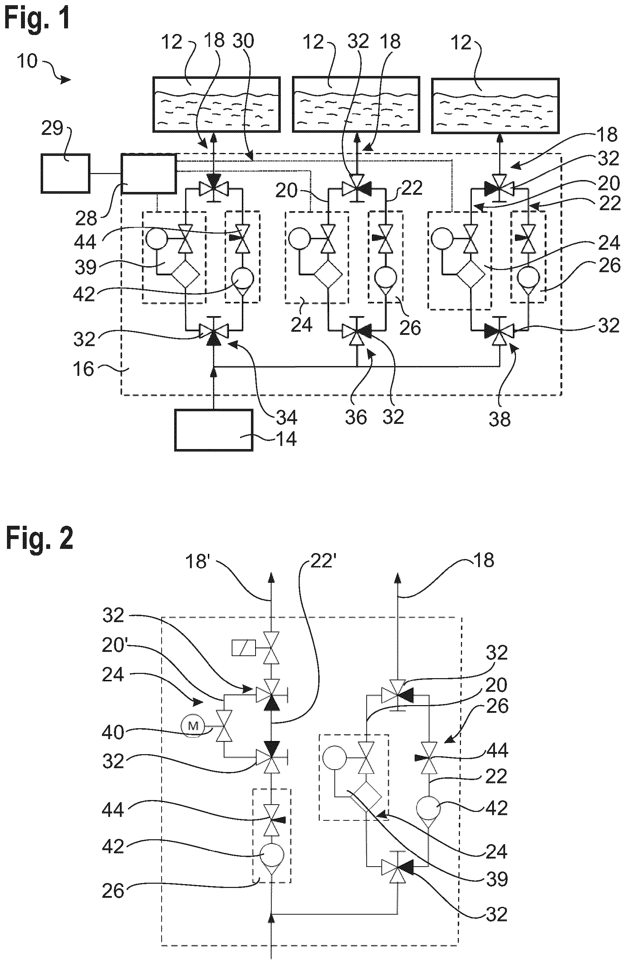

Figure 1 shows a fish farm oxygen supply system 10 (also simply called "oxygen supply system 10").

The fish farm oxygen supply system 10 is used to supply animals in water-filled tanks 12 with a sufficient amount of oxygen from an oxygen reservoir 14, e.g. a pressurized reservoir bottle. In this example, the tanks 12 are adapted to rise fish, but of course the tanks 12 could also be used for other animals.

The oxygen supply system 10 is in this example a compact, preconfigured assembly that is mounted in a control cabinet 16 (only indicated in Fig. 1).

The oxygen supply system 10 has one or several oxygen supply lines 18. In the embodiment of Figure 1, three separate parallel oxygen supply lines 18 are provided. In this example, they each lead to a separate tank 12. In this example, all three oxygen supply lines 18 are configured identical.

Each oxygen supply line 18 has one main supply line 20 and in parallel thereto one bypass line 22. Both the main supply line 20 and the bypass line 22 are designed to each provide the necessary oxygen flow rate for the tank 12 connected to the respective oxygen supply line 18 alone.

In the main supply line 20, a first flow control device 24 is arranged, while the bypass line 22 contains a second flow control device 26.

The first flow control device 24 is an electrically or electronically driven device. The second flow control device 26, on the other hand, is a purely mechanical device that operates independently from an electrical power supply.

In a regular operation mode, oxygen is supplied only through the main supply line 20, and the through flow of oxygen is controlled by the first flow control device 24 alone.

An electronic controller 28 in the oxygen supply system 10 is connected to each of the first flow control devices 24 in the different oxygen supply lines 18 to adjust the desired oxygen through flow. In this example the connection is realized by a bus 30. The controller 28 in this example is connected to a remote site 29 so that the complete fish farm oxygen supply system 10 can be remotely controlled.

The bypass line 22 serves to supply oxygen from the oxygen reservoir 14 to the respective tank 12 in case of a power failure when the first flow control device 24 stops operating due to lacking electrical power. Due to its purely mechanical nature, the second flow control device 26 then provides the necessary oxygen flow to the respective tank 12.

Both the first and the second flow control device 24, 26 are adapted to set an oxygen flow rate through the main supply line 20 or bypass line 22, respectively, to a desired value.

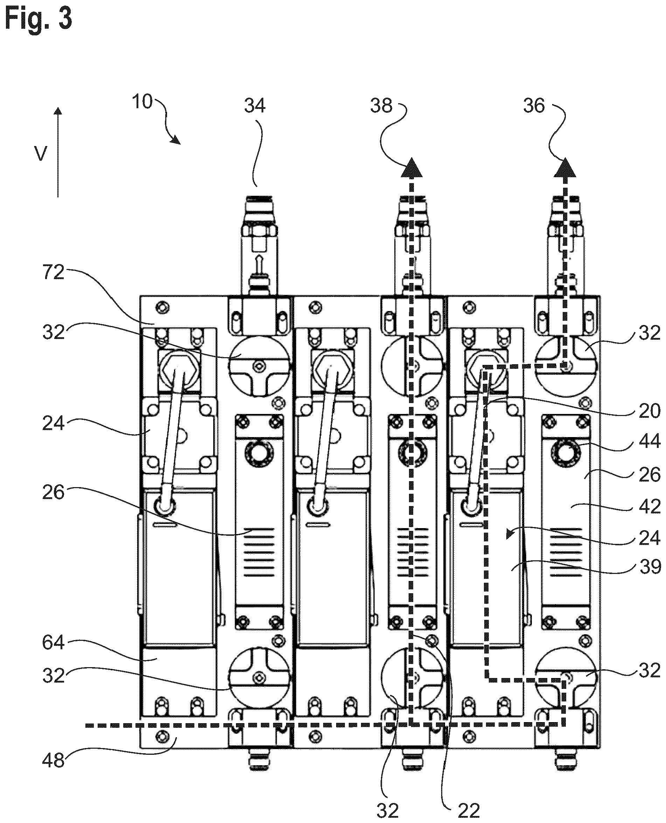

In each oxygen supply line 18, a first and a second switching valve 32 are arranged with which the oxygen flow through the main supply line 20 and bypass line 22 can be controlled (see also Fig. 3).

In all examples shown here, the switching valves 32 are 3/3-way valves with three different switching positions so that three different flow paths 34, 36 and 38 through the oxygen line 18 are realizable (see Figures 1 to 3).

The switching valves 32 are configured and positioned so that oxygen can flow either through the main supply line 20 in a first switching position (flow path 36) or the bypass line 22 in a second switching position (flow path 38). In a third switching position of the switching valves 32, both the main supply line 20 and the bypass line 22 are closed (flow path 34).

In flow path 34, no oxygen flows through the respective oxygen supply line 18.

In flow path 36, oxygen flows through the main supply line 20 and the first flow control device 24, while the bypass line 22 is closed.

In flow path 38 oxygen flows through the bypass line 22 and the second flow control device 26, while the main supply line 20 is closed.

The switching valves 32 may be manually operable or may be configured so that on a power failure they automatically switch to the flow path 38.

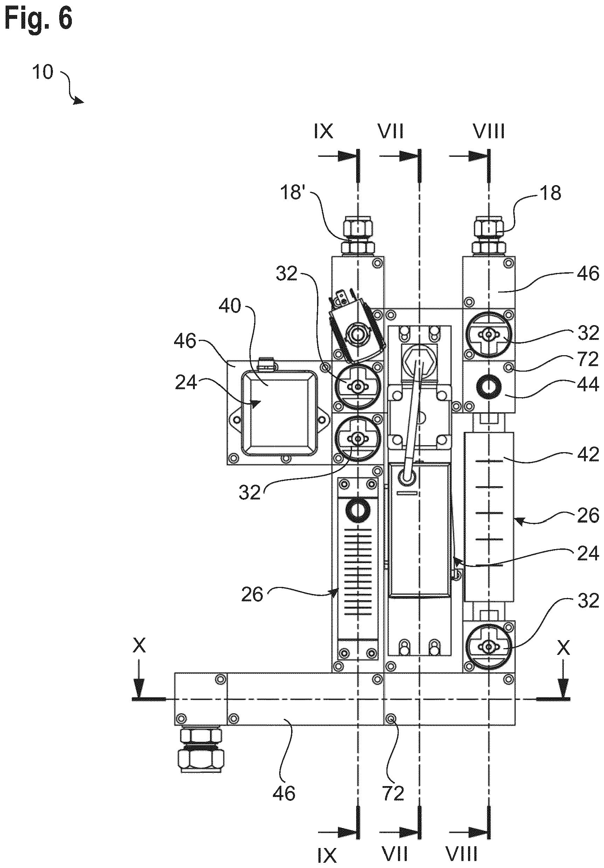

In a first variant of the oxygen supply line 18 shown in Figs. 2 and 6 on the right hand side, the first flow control device 24 is a digitally controllable mass flow controller (MFC) 39 as it is known in the art.

The first flow control device 24 is connected to the controller 28 and optionally to the remote site 29. Digital data referring to a desired oxygen through flow through the main supply line 20 is transmitted from the controller 28 to the first flow control device 24, which sets and adjusts the respective desired flow rate. As is known in the art, the mass flow controller contains a through flow sensor and a proportional valve to adjust the through flow according to applied voltage or current predetermined by the controller 28.

The second flow control device 26 is arranged in parallel with the first flow control device 24. The switching valves 32 are positioned upstream and downstream of both the first and second flow control device 24, 26, the first and second flow control device 24, 26 being connected to different ports of the first and second switching valve 32.

In a second variant shown in Figs. 2 and 6 on the left-hand side, the first flow control device 24 in the main supply line 20' of the oxygen supply line 18' is an electrically driven proportional valve 40. The switching valves 32 are positioned upstream and downstream of the valve 40. In this variant, the assembly of the proportional valve 40 and the two switching valves 32 is arranged in series with the second flow control device 26, so that the second flow control device 26 is both part of the main supply line 20' and the bypass line 22'. The bypass line 22', however, directly connects the first and second switching valves 32, bypassing the proportional valve 40.

In both variants, the second flow control device 26 is here a VA meter 42, e.g. a rotameter as is known in the art, combined with are manually adjustable needle valve 44. The second flow control device 26 is a purely mechanical device which upholds the currently set flow rate even in case of a power outage.

In case of the second variant shown in Figure 2, the second flow control device 26 is always in the flow path, when oxygen flows through supply line 18'. When in the regular operation mode the proportional valve 40 as the first flow control device 24 serves to adjust the oxygen through flow, the second flow control device 26 is usable as an optical indicator for the currently set flow rate. In this mode, the needle valve 44 is set to its maximum open position.

Operation of the fish farm oxygen supply system 10 is now described for the embodiment shown in figure 1.

In the regular operation mode where electric power at the fish farm is working, the oxygen supply is controlled by the first flow control device 24 of each oxygen supply line 18 alone. Input data for the controller 28 is provided from the remote site 29, feedback is transmitted through the bus 30 from the first flow control devices 24 back to the controller 28 and remote site 29.

The first and second switching valve 32 are set to the flow path 36 as indicated in figures 1 and 3. Oxygen flows only through the main supply lines 20 of each oxygen supply line 18 and, therefore, only through the first flow control devices 24, to the respective tanks 12.

Should the electric power fail, the switching valves 32 are switched to the flow path 38 and the bypass lines 22. Now, oxygen only flows through the bypass lines 22 and the second flow control devices 26, not through the main supply lines 20 and the first flow control devices 24. The oxygen flow rate is preset by the manual setting of the needle valve 44 of the second flow control devices 26, so that on switching the switching valves 32 to the flow path 38 the desired oxygen flow rate results.

The flow path 38 is also usable for servicing or replacing the first flow control device 24 of the respective oxygen supply line 18 during the regular operating mode. As the oxygen only flows through the bypass line 22, it is possible to remove and service or replace the first flow control device 24 without interrupting regular operation. When maintenance is completed, the first and second switching valve 32 are switched back to the flow path 36, and control of the oxygen through flow is returned to the controller 28 and the first flow control device 24.

The flow path 34, in which both the main supply line 20 and the bypass line 22 are closed, is e.g. used for maintenance work on the respective oxygen supply line 18 or the line to the connected tank 12. In this mode, any component of the respective oxygen supply line 18 or downstream thereof may be removed and serviced or replaced.

In the second variant, essentially, the function is the same. In the regular operation mode, oxygen flows through the main supply line 20', which comprises the first flow control device 24, both switching valves 32 and the second flow control device 26. The second flow control device 26 is set to its maximum through flow. The switching valves 32 are switched so that the valve 40 is in the flow path. Oxygen flow rate is controlled exclusively by the controller 28 and the proportional valve 40.

In case of a power outage, the switching valves 32 are switched manually to the bypass line 22', which contains only the second flow control device 26 and the two switching valves 32. The desired oxygen flow rate is set manually on the second flow control device 26, here by adjusting the needle valve 44.

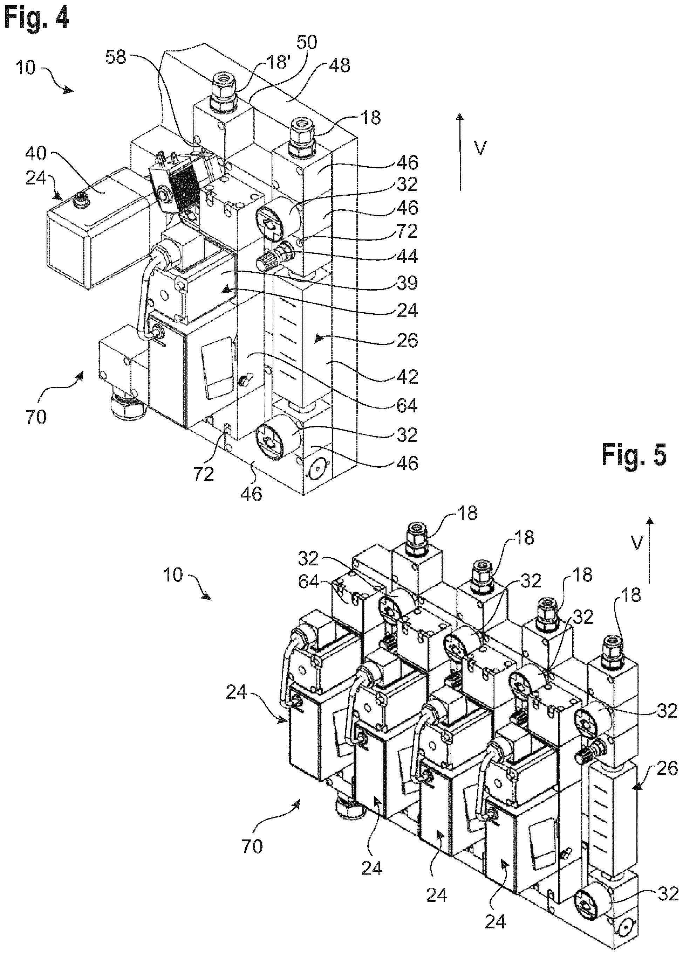

Figs. 3 to 6 show the fish farm oxygen supply system 10 in the installed orientation, where the longitudinal extension of both the first and second flow control device 24, 26 is aligned along the vertical direction V.

In this example, the complete fish farm oxygen supply system 10 is preconfigured as a compact assembly at a production site and shipped to the fish farm, where it is installed in the control cabinet 16 (see Figs. 6 to 10).

Most or all components, including the first flow control device 24 and the switching valves 32, are fixed to individual mounting blocks 46 that in turn are mounted to a carrier plate 48. The mounting blocks 46 are arranged relative to the carrier plate 48 so that their rear face 50 lies against the carrier plate 48 and their opposite front face 52 is directed away from the carrier plate 48.

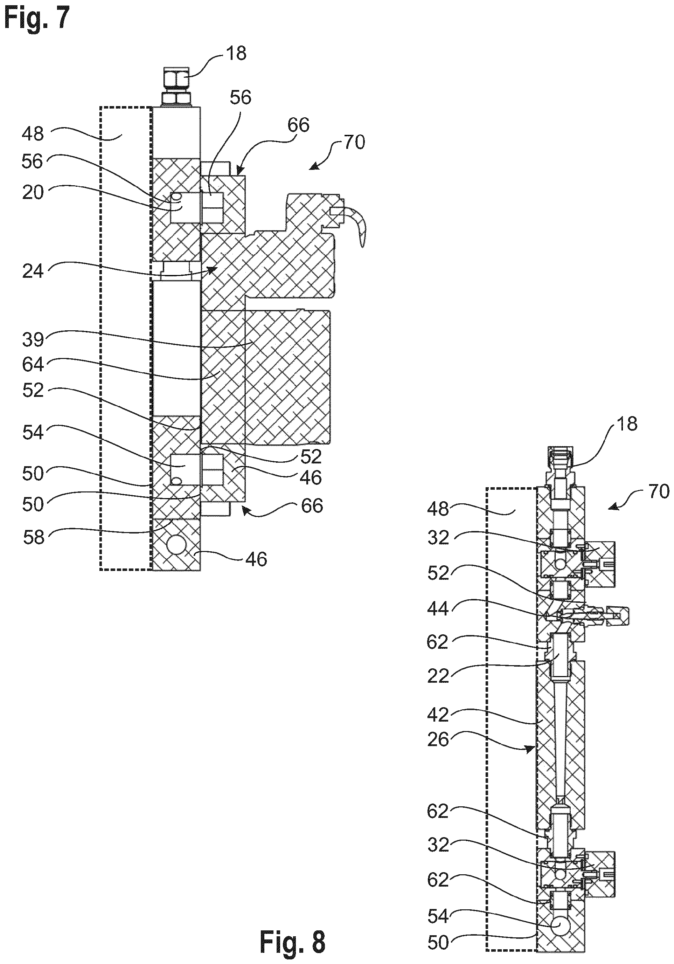

The mounting blocks 46 are provided in different shapes and functions as a kind of building kit. For instance, mounting blocks 46 are provided that include one or more flow channel sections 54 extending between fluid ports 56 in their side faces 58 and/or front faces 52 (see Figs. 7 to 10).

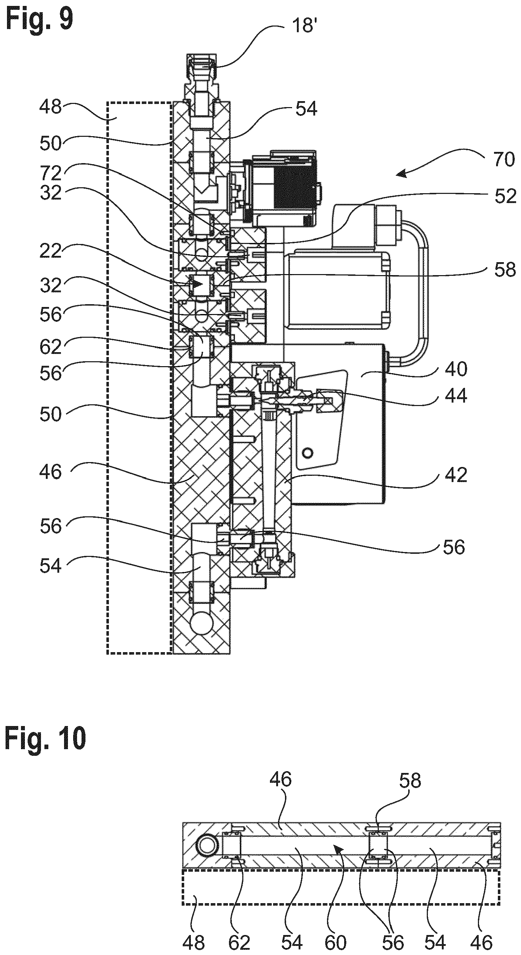

Adjacent mounting blocks 46 are connected at their side faces 58 so that the fluid ports 56 of adjoining flow channel section 54 are connected to form a continuous flow channel 60 (see for example Fig. 10).

In this example, tube shaped connectors 62 are arranged between adjacent flow channel sections 54 to provide sealing between adjacent mounting blocks 46.

Fig. 7 shows the first flow control device 24 in form of a mass flow controller 39 in the main supply line 20 of the oxygen supply line 18.

The mass flow controller 39 is mounted on a special kind of mounting block 46 in form of a bridge block 64 providing a fluid connection to fluid ports 56 at both its longitudinal ends 66. The fluid ports 56 are arranged in the rear face 50 of the bridge block 64 and are connected each to a fluid port 56 on the front face 52 of an adjacent upper end mounting block 46 and an adjacent lower end mounting block 46, that in turn, are attached to the carrier plate 48.

The bridge block 64 is here composed of several separate mounting blocks 46 that are connected by connecting screws along the longitudinal extension of the bridge block 64 (not shown).

In this example, all mounting blocks 46 are adapted in their external dimensions and the position of screw openings to the grid of threaded holes in the carrier plate 48.

Figure 8 shows a section through the bypass line 22 of the oxygen supply line 18 and through the switching valves 32.

In this example, each of the switching valves 32 is mounted to a front face 52 of a suitable mounting block 46.

Valve seats of the switching vales 32 are optionally formed in the front face 52 of the respective mounting block 46, in the switching valve 32 itself or in both of these components.

The second flow control device 26 is here mounted between two mounting blocks 46 at their side faces 58, using tube shaped connectors 62 and connected to the flow channel sections 54 of the adjacent mounting blocks 46.

Figure 9 shows the mounting of a first flow control device 24 in form of a proportional valve 40 in the oxygen supply line 18'. The proportional valve 40 is mounted to the front face 52 of a suitable mounting block 46. Also, the two switching valves 32 are mounted each to a front face 52 of a suitable mounting block 46.

In the example shown in Figure 9, the second mass flow control device 26 is also mounted to the front face 52 of a suitable mounting block 46.

All components that are mounted to a front face 52 of a mounting block 46 are accessible from a front side 70 of the oxygen supply system 10 and can be removed or replaced in a direction vertical to the plane of the carrier plate 48 without removing or detaching any of the mounting blocks 46. This relates in particular to the first flow control devices 24 (in both variants) and the switching valves 32, and in case of the example shown in Figure 9 also to the second flow control device 26.

To service or replace any of these components, fixing screws 72 that attach the component to the respective mounting block 46 or bridge block 64 are released and the respective component is removed. After servicing or after providing a replacement, the component is placed with its fluid ports 56 against the fluid ports 56 of the respective mounting block 46 or bridge block 64, and the fixing screws 72 are attached again.

As already described above, in particular removing and reattaching or replacing the first flow control device 24 of the oxygen supply line 18, 18' can be performed without interrupting the oxygen flow to this oxygen supply line 18, 18'. For this, the switching valves 32 are switched to the flow path 38 so that the oxygen only flows through the bypass line 22. After the maintenance is completed, the switching valves 32 are switched back to the flow path 38 through the main supply line 20.

## Claims

1. A fish farm oxygen supply system (10) with at least one oxygen supply line (18; 18'), each oxygen supply line (18; 18') comprising a main supply line (20; 20') and a bypass line (22; 22') bypassing the main supply line (20; 20'), a first flow control device (24) being arranged in the main supply line (20; 20') and a second flow control device (26) being arranged in the bypass line (22; 22'), the first flow control device (24) being an electrically or electronically driven device and the second flow control device (26) being a purely mechanical device.

2. The fish farm oxygen supply system (10) according to claim 1, wherein a first switching valve (32) and a second switching valve (32) for switching an oxygen flow between the main supply line (20; 20') and the bypass line (22; 22') are provided.

3. The fish farm oxygen supply system (10) according to claim 2, wherein the switching valves (32) are 3/3-way valves.

4. The fish farm oxygen supply system (10) according to claim 2 or claim 3, wherein the switching valves (32) are adapted provide three flow paths in total so that oxygen flows either through the main supply line (20; 20') or through the bypass line (22; 22') or through neither.

5. The fish farm oxygen supply system (10) according to any of the preceding claims, wherein the first flow control device (24) is a mass flow controller (39) or an electrically driven proportional valve (40), in particular a solenoid valve.

6. The fish farm oxygen supply system (10) according to any of the preceding claims, wherein a controller (28) is provided that is electronically connected to the first flow control device (24) and adapted to control the first flow control device (24).

7. The fish farm oxygen supply system (10) according to any of the preceding claims, wherein the second flow control device (26) is a manually adjustable variable-area flow meter (42), in particular with an integrated needle valve (44).

8. The fish farm oxygen supply system (10) according to any of the preceding claims, wherein several oxygen supply lines (18) are arranged in parallel, each oxygen supply line (18) having a first flow control device (24) arranged in their respective main supply line (20) and a second flow control device (26) arranged in their respective bypass line (22).

9. The fish farm oxygen supply system (10) according to any of the preceding claims, wherein mounting blocks (46) adjacently fixed to a carrier plate (48) are provided, the mounting blocks (46) having flow channel sections (54), the flow channel sections (54) of adjacent mounting blocks (46) being fluidly connected to each other to form a flow channel (60).

10. The fish farm oxygen supply system (10) according to claim 9, wherein at least the first and second flow control devices (24, 26) are non-destructively detachable connected to an associated mounting block (46).

11. The fish farm oxygen supply system according to claim 10, wherein all first flow control devices (24) are mounted to their associated mounting blocks (46) at and to a front face (52) of the mounting block (46).

12. The fish farm oxygen supply system (10) according to claim 10 or 11, wherein the first flow control device (24) is mounted on a bridge block (64) distanced from the carrier plate (48) and mechanically and fluidically connected to a front face (52) of an upper end and a lower end mounting block (46) at two opposite longitudinal ends (66) of the bridge block (64).
